# EUROPEAN PATENT SPECIFICATION

(11) **EP 4 255 176 B1**
(45) Date of publication and mention of the grant of the patent: **29.04.2026**
(21) Application number: 21823390.6
(22) Date of filing: 29.11.2021
(51) Int. Cl.: A01J 5/04, A01K 1/12

(54) **MILKING PARLOUR WITH A SUPPORT DEVICE FOR THE LONG MILK TUBE**
MELKSTAND MIT EINER HALTEVORRICHTUNG FÜR DEN LANGEN MILCHSCHLAUCH
SALLE DE TRAITE DOTÉE D'UN DISPOSITIF DE SUPPORT POUR LE LONG TUYAU DE LAIT

(30) Priority: 01.12.2020 SE 2051405
(43) Date of publication of application: 11.10.2023
(73) Proprietor: DeLaval Holding AB, 147 21 Tumba (SE)
(72) Inventor: HAMERTON, Lance, 147 21 Tumba (SE); LEDZION, Emanuel, 147 21 Tumba (SE); MIRSKI, Slawomir, 147 21 Tumba (SE); WIPPERFURTH, Stuart, 147 21 Tumba (SE)
(74) Representative: DeLaval International AB
(86) International application number: PCT/SE2021/051183
(87) International publication number: WO 2022/119492

(56) References cited:
- DE-A1- 102006 019 704
- US-A- 5 960 738

## Description

### TECHNICAL FIELD

The present invention relates to a milking parlour arrangement, comprising; a milking stall configured to house an animal during milking of the animal, said milking stall being located on a milking platform; an operator pit, provided at a rear end of the milking platform, said operator pit having an operator pit floor, which is at a lower level than the level of the milking platform; and a milking apparatus comprising a milking cluster, and a long milk tube connected to the milking cluster, said milking apparatus being configured to be in an active state in which the milking cluster is attached to the teats of the animal in the milking stall, and an inactive state in which the milking cluster hangs down into the operator pit.

In rotary parlours, the milking stall may also be referred to as the milking bail.

The rear end of the milking platform, as referred to here, is the end of a platform towards which the animal, typically a cow, is assumed to have its rear end during milking. An operator is assumed to stand in the operator pit when pre-treating as well as attaching the milking clusters to the teats of the animals to be milked and/or post-treating the teats of the animals that have been milked.

### BACKGROUND

In some milking parlour arrangements a tube support is provided for the purpose of holding the long milk and pulsation tubes in such a position that the milking cluster is in a good position and such that a balanced weight distribution from the tubes and the milking cluster is applied to the teats of the animal. The tube support holds the tubes in such a good position while the milking cluster is attached to the animal in an active position. However, after completion of the milking, when the milking cluster is detached from the animal, the tube support is in the way of the operator for post treatment of the animal that has just been milked, or for a preparation of the next animal to be milked. A tube support according to prior art is disclosed in, for example, WO201014811 and US5960738.

### THE OBJECT OF THE INVENTION

It is an object of the present invention to present a milking parlour arrangement that comprises a tube support for the long milk tube that enables a stable holding of the milk tube when the milking cluster is in its active position and which, when the milking cluster is in an inactive position, is not in the way of the operator as the latter, while standing in the operator pit, is to perform post treatment of an animal that has just been milked, or for a preparation of the next animal to be milked. The tube support should hereby allow for easy attachment and adjustment of the long milk tube by an operator during operation in order to achieve a proper tube alignment in a supported position when the milking cluster is in an active milking position. The proper tube alignment and support provides said balanced weight distribution from the milking cluster and thereby a more efficient milking performance. It should also provide for easy detachment of the long milk tube from the supported position when milking is completed so that the tube support and the milk tube can be moved out of the way for the operator.

### SUMMARY

The object of the invention is achieved by means of a milking parlour arrangement, comprising,
- a milking stall configured to house an animal during milking of the animal, said milking stall being located on a milking platform,
- an operator pit, provided at a rear end of the milking platform, said operator pit having an operator pit floor, which is at a lower level than the level of the milking platform,
- a milking apparatus comprising
   - a milking cluster, and
   - a long milk tube connected to the milking cluster,
- said milking apparatus being configured to be in an active state in which the milking cluster is attached to the teats of the animal in the milking stall, and an inactive state in which the milking cluster hangs down into the operator pit, and
said milking parlour arrangement comprises a bracket attached to the long milk tube and an attachment body provided at the rear end of the milking platform, **characterised in** that one of the bracket and the attachment body comprises a magnet, and the other of the bracket and attachment body comprises a ferromagnetic material, and in that, in said active state, the bracket is attached to the attachment body by a magnetic attraction force therebetween, wherein the magnet and the ferromagnetic material present an attraction force to each other that exceeds a gravitational force acting on the long milk tube and inferior to a gravitational force acting on the milking cluster in combination with the milk tube.

In this way, an operator may easily attach the bracket to the attachment body in connection to the start of a milking sequence. The long milking tube is supported in the bracket and can be adjusted to achieve the proper tube alignment with the attached milking cluster during operation. Furthermore, upon detachment of the milking cluster from the udder of the animal, the tube will follow the motion of the milking cluster, whereby the bracket is detached from the attachment body such that the bracket including the milking tube gets out of the way for an operator who is to perform post-treatment or the like of the animal.

The rear end of the milking platform is the side or curb of the platform turned towards the operator pit, and may thereby define a portion of a wall of the operator pit.

According to one embodiment, the magnet is a permanent magnet.

According to one embodiment, the attachment body comprises the ferromagnetic material and the bracket comprises the magnet.

According to a further embodiment, the bracket comprises a sleeve with a through-hole for connecting the bracket to the long milk tube, wherein an outer portion of the sleeve has a magnet holder with a pocket in which a permanent magnet is provided.

According to one embodiment, the magnet is an electromagnet.

According to one embodiment, the milking parlour arrangement comprises a control unit for controlling the operation of the electromagnet, and the control unit is configured to control the electromagnet on basis of input received manually from an operator and/or input received automatically from a sensor.

According to one embodiment, the milking parlour arrangement is a rotary milking parlour arrangement having a plurality of milking stalls distributed around a common rotational axis.

According to one embodiment, the milking parlour arrangement comprises a sensor for sensing the rotational position of said rotary milking parlour or the individual milking stall and a control unit for controlling the electromagnet on basis of input received from said sensor. As an alternative, the sensor may be a sensor for sensing the position of the milking cluster, the milk flow through the milk tube or any other parameter reflecting the status of a milking session.

According to the invention, the magnet and the ferromagnetic material present an attraction force to each other that exceeds a gravitational force acting on the long milk tube (and long pulse tubes) and inferior to a gravitational force acting on the milking cluster in combination with the milk tube. The magnetic attraction force should be such that, given the further structural features of the parts involved, such as the milking cluster, the tubes and the height from which the milking cluster falls into the operator pit from the milking platform and generates a force on the bracket, the bracket will detached from the attachment body due to the downforce thereby generated by the milking cluster and the milking tubes and possible further tubes attached to the bracket.

According to one embodiment, the milking parlour arrangement comprises a cluster removal device, which is connected to the milking cluster through a cord and configured to retract the cord in order to pull the milking cluster from the teats of the animal upon ending of a milking operation. The cluster removal device is configured to pull the cluster into the operator pit. According to one embodiment, the cluster removal device comprises an arm extending to a position above the operator pit, wherein the cord is guided by said arm such that the milking cluster will hang into the operator pit from said arm when in its retracted inactive state.

According to one embodiment, the cluster removal device is configured to automatically drop the milking cluster into a position inside the operator pit in which the milking cluster hangs down in the inactive state from the cluster removal device at a position below a level at which the attachment body is located.

According to one embodiment, the attachment body is an integrated part of or attached to a rear end edge of the milking platform. The attachment body may comprise a plate or the like.

According to one embodiment, the milking parlour arrangement comprises a pulsation tube configured to provide pulsating vacuum to the milking cluster, and the pulsation tube is connected to and held by said bracket. The pulsation tube extends generally in parallel with the long milk tube.

Further features and advantages of the present invention will be presented in the following detailed description of embodiments.

### BRIEF DESCRIPTION OF THE DRAWING

Embodiments of the invention will be described with reference to the drawings, on which:
Fig. 1 is a schematic perspective view of a first embodiment of a milking parlour arrangement in an active state,
Fig. 2 is a view of the arrangement shown in fig. 1, in an inactive state,
Fig. 3 is a schematic perspective view of a second embodiment of a milking parlour arrangement in an active state,
Fig. 4 is schematic representation of the second embodiment on a rotary milking parlour arrangement, and
Figs. 5a - 5c are showing different views of an embodiment on a bracket in the milking parlour arrangement.

### DETAILED DESCRIPTION OF EMBODIMENTS

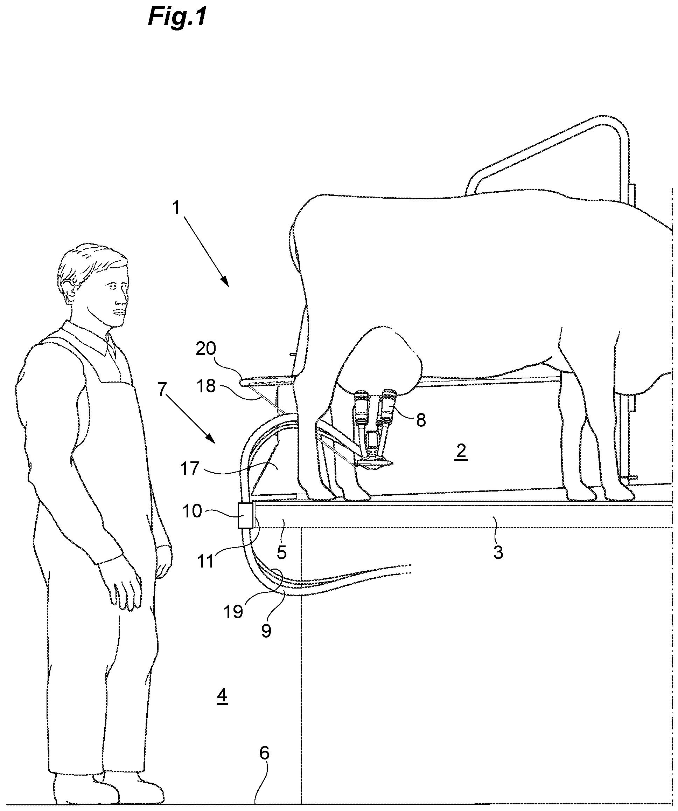

Fig. 1 shows milking parlour arrangement 1 according to the invention. The milking parlour arrangement comprises a milking stall 2 configured to house an animal during milking of the animal. The milking stall 2 is located on a milking platform 3. The milking platform may be a stationary platform or a rotary platform. An operator pit 4 is provided at a rear end 5 of the milking platform 3, said operator pit 4 having an operator pit floor 6, which is at a lower level than the level of the milking platform 3.

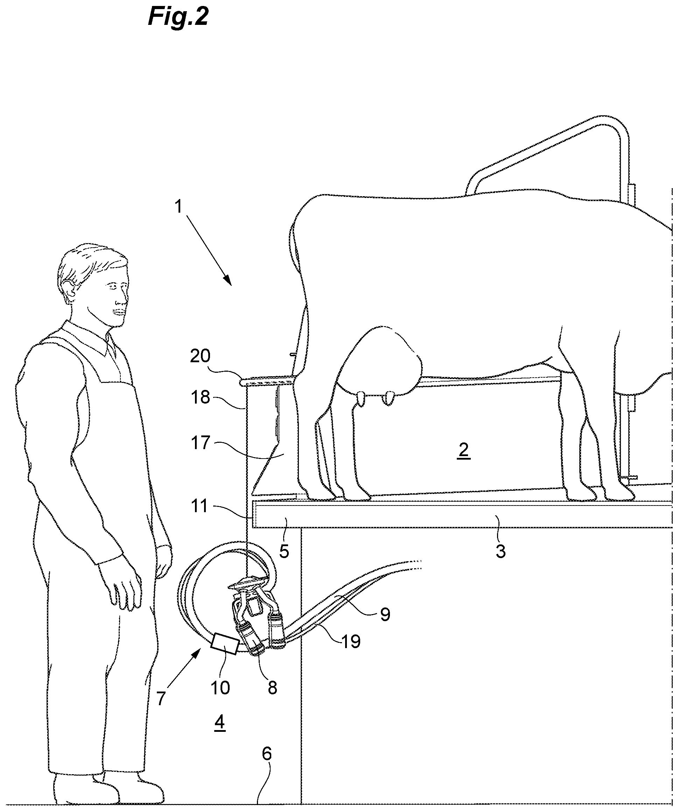

The milking parlour arrangement 1 further comprises a milking apparatus 7 comprising a milking cluster 8 and a long milk tube 9 connected to the milking cluster 8. In parallel with the long milk tube 9 there is also provided a pulsation tube 19 configured to provide pulsating vacuum to the cluster 8. In fig. 1 the milking apparatus 7 is in an active state in which the milking cluster 8 is attached to the teats of the animal in the milking stall 2. Fig. 2, on the other hand, shows an inactive state, after or before a milking sequence, in which the milking cluster 8 is removed from the animal and hangs down into the operator pit 4.

The long milk tube 9 is in one end connected the cluster 8 and in another end connected to a milk line (not shown) arranged at a level below the level of the milking platform 3. Said milk line may be arranged under the milking platform 3.

The milking parlour arrangement 1 further comprises a bracket 10 attached to the long milk tube 9 and to the pulsation tube 19, and an attachment body 11, comprising a plate attached to a rear end edge or curb of the milking platform 3. One of the bracket 10 and the attachment body 11 comprises a magnet, and the other of the bracket 10 and attachment body 11 comprises a ferromagnetic material. In the embodiment shown in figs. 1 and 2, the attachment body 11 comprises the ferromagnetic material and the bracket 10 comprises the magnet, and the magnet is a permanent magnet.

In the active state shown in fig. 1, the bracket 10 is attached to the attachment body 11 by a magnetic attraction force there between. In the inactive state shown in fig. 2, the bracket 10 is detached from the attachment body 11. The length and position of the part of the long milking tube 9 extending from the bracket 10 to the cluster 8 can be adjusted, and the position of the attachment body 11, is such that, in the active state, when the milking cluster 8 is attached to the teats of an animal, the long milk tube 9, and the pulsation tube 19, will be aligned with the milking cluster 8 and partly lifted through the connection between the bracket 10 and the attachment body 11. Thereby, they will be properly aligned and not exert any substantial down-force on the milking cluster 8. The animal will thus experience less pulling force from the milking cluster 8, the long milking tube 9 and the pulsation tube 19.

In the embodiment shown in figs. 1 and 2, The rear end 5 of the milking platform 3 is the side or curb or of the milking platform 3 turned towards the operator pit 4, which side defines a wall portion of the operator pit 4.

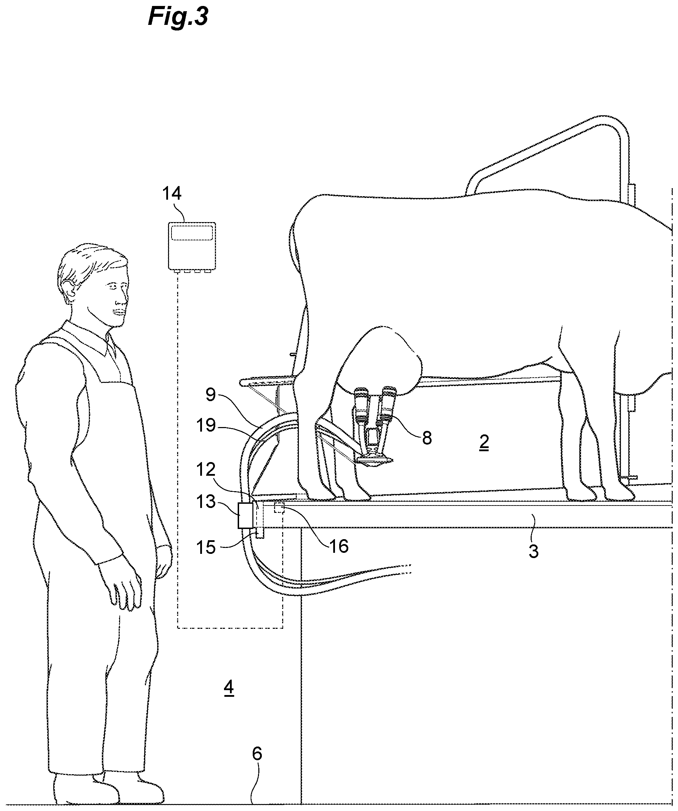

Fig. 3 shows an embodiment in which the attachment body 12 carries the magnet and in which the magnet is an electromagnet. In this embodiment, the bracket 13 comprises a ferromagnetic material. In the active state of the electromagnet, the bracket 13 can be attached to the attachment body 12.

The milking parlour arrangement comprises a control unit 14 for controlling the operation of the electromagnet of the attachment body 12. The control unit 14 is configured to control the electromagnet on basis of input received manually from an operator. A push button 15 for manual activation and deactivation of the electromagnet is also provided. There is also provided a sensor 16 for sensing any of the position of the milking cluster, the milk flow through the long milk tube or any other parameter reflecting the status of a milking session. The control unit 14 is configured to control the electromagnet of the attachment body 12 on basis of input from the sensor 16. The control unit 14 may be configured to prioritize the input from one of the push button 15 and the sensor 16. The push button 15 may by directly connected to the electric circuit that powers the electromagnet and thus not connected to the control unit 14, whereby the push button 15 provides for direct manual control of the electromagnet without involving the control unit 14. The control unit 14 including the push button 15 may also be incorporated into the shown cabinet including a milking cluster support arm 20.

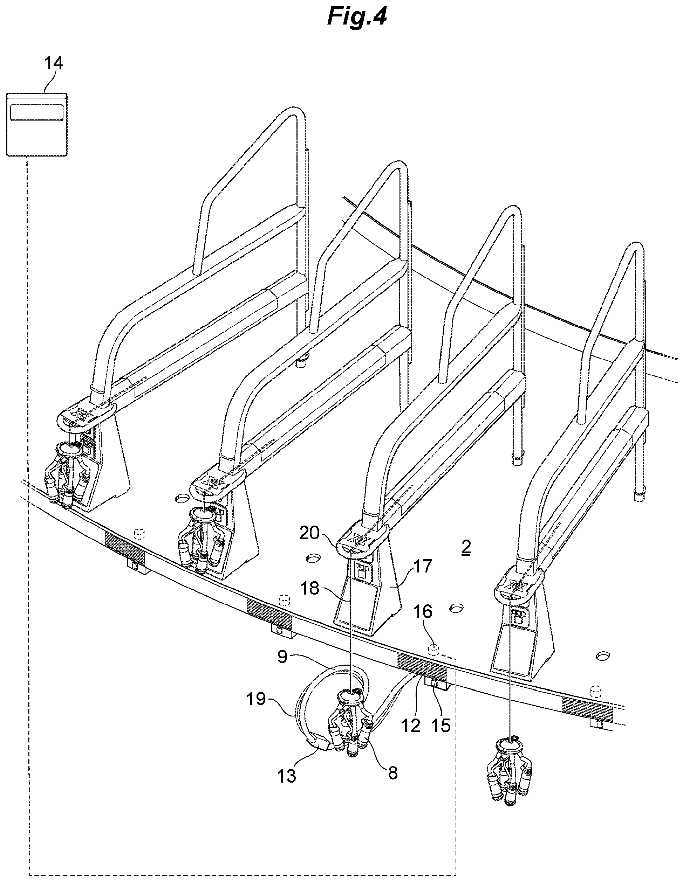

Fig. 4 is a perspective view in which the milking parlour arrangement disclosed with reference to fig. 3 is a rotary milking parlour arrangement having a plurality of milking stalls distributed around a common rotational axis. According to such an embodiment, said sensor 16 may be a sensor for sensing the rotational position of said rotary milking parlour or the individual milking stall 2. Also the embodiment disclosed with reference to fig. 1 may be a rotary milking parlour arrangement corresponding to the one shown in fig. 4.

The magnet and the ferromagnetic material, in both embodiments presented, may present an attraction force to each other that exceeds a gravitational force acting on the long milk tube 9 and the long pulse tube 19 and inferior to a gravitational force acting on the milking cluster 8 in combination with the milk tube 9 and the pulsation tube 19. The magnetic attraction force should be such that, given the further structural features of the parts involved, such as the milking cluster 8, the tubes 9, 19 and the height from which the milking cluster 8 falls into the operator pit from the milking platform 3 and generates a force on the bracket 10, 13, the bracket 10 will at least be detached from the attachment body 11, 12 due to the downforce thereby generated by a cluster drop of the milking cluster 8 including the long milk and pulsation tubes 9, 19 attached to the bracket 10.

The milking parlour arrangement comprises a cluster removal device 17, which is connected to the milking cluster 8 through a cord 18. The cluster removal device 17 is configured to retract the cord 18 in order to pull the milking cluster 8 from the teats of the animal upon ending of a milking operation. The cluster removal device 17 is configured to pull the milking cluster 8 into the operator pit, as shown in fig. 2, in the inactive state of the milking cluster 8. According to one embodiment, the cluster removal device 17 comprises an arm 20 extending to a position above the operator pit 4. The cord 18 is guided by said arm such that the cluster 8 will hang into the operator pit 4 from said arm 20 when in its retracted inactive state.

The cluster removal device 17 is configured to automatically drop the milking cluster 8 into a position inside the operator pit 4 in which the milking cluster 8, at least initially, hangs down in the inactive state from the cluster removal device 17 at a position below a level at which the attachment body 11, 12 is located.

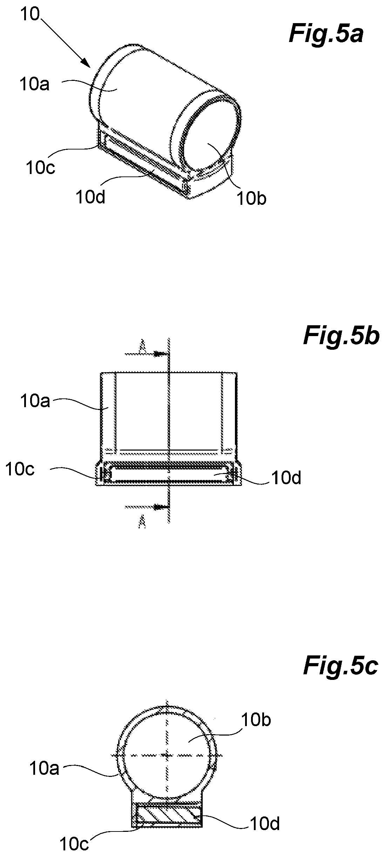

Figs. 5a - 5c show different views of an embodiment on a bracket 10 in the milking parlour arrangement 1 according to the invention. Fig. 5a is showing a perspective view of the bracket 10 comprising a sleeve 10a, which is forming a through-hole 10b for the long milk tube 9 of the milking cluster 8. An inner diameter of the through-hole 10b is thereby adapted to the diameter of the long milk tube 9, so that the sleeve 10a closely fits around the long milk tube 9. In this way the bracket 10 will stay at a desired location and support the long milk tube 9 in the active milking position. The through-hole 10b may nevertheless be configured in size so that the position of the bracket 10 on the long milk tube 9 can be adjusted manually by hand. Fig. 5b is showing a side view of the bracket 10 according to the embodiment, wherein Fig. 5c is further showing a cross-section along A - A in Fig. 5b. As can be seen the bracket 10 further comprises a holder for a permanent magnet 10d, which is extending on an outer portion along the sleeve 10a. The permanent magnet 10d is arranged in a pocket 10c of the holder. The sleeve 10a with its magnet holder may for instance be manufactured (moulded) in one piece from a plastic material, wherein the permanent magnet 10d is inserted into the pocket 10c. The permanent magnet 10d may furthermore be securely fixed in the pocket 10c by means of for instance glue or resin. A high-strength permanent magnet, such as a neodymium magnet having a lifting capacity in a range of 9 - 13 kg, is preferably utilized in order to provide proper support for the milking cluster and the tubes. The permanent magnet 10d in this embodiment is a neodymium magnet with lifting capacity of approximately 11 kg. The magnetic force should not be too strong, since it may prevent proper release during cluster removal and cluster drop and it will furthermore be difficult to adjust the position of the bracket during operation.

### REFERENCE NUMBER LIST

- 1: milking parlour arrangement
- 2: milking stall
- 3: milking platform
- 4: operator pit
- 5: rear end
- 6: operator pit floor
- 7: milking apparatus
- 8: milking cluster
- 9: long milk tube
- 10, 13: bracket
- 10a: sleeve of bracket
- 10b: through-hole for long milk tube
- 10c: pocket for permanent magnet
- 10d: permanent magnet
- 11, 12: attachment body
- 14: control unit
- 15: push button
- 16: sensor
- 17: cluster removal device
- 18: cord
- 19: pulsation tube
- 20: arm

## Claims

1. A milking parlour arrangement (1), comprising,
- a milking stall (2) configured to house an animal during milking of the animal, said milking stall (2) being located on a milking platform (3),
- an operator pit (4), provided at a rear end (5) of the milking platform (3), said operator pit (4) having an operator pit floor (6), which is at a lower level than the level of the milking platform (3),
- a milking apparatus (7) comprising
- a milking cluster (8), and
- a long milk tube (9) connected to the milking cluster (8),
- said milking apparatus being configured to be in an active state in which the milking cluster (8) is attached to the teats of the animal in the milking stall (2), and an inactive state in which the milking cluster (8) hangs down into the operator pit (4), and
said milking parlour arrangement comprises a bracket (10, 13) attached to the long milk tube and an attachment body (11, 12) provided at the rear end of the milking platform (3), **characterised in that** one of the bracket (10, 13) and the attachment body (11, 12) comprises a magnet, and the other of the bracket (10, 13) and attachment body (11, 12) comprises a ferromagnetic material, and **in that**, in said active state, the bracket (10, 13) is attached to the attachment body (11, 12) by a magnetic attraction force therebetween, wherein the magnet and the ferromagnetic material present an attraction force to each other that exceeds a gravitational force acting on the long milk tube (9) and inferior to a gravitational force acting on the milking cluster (8) in combination with the milk tube (9).

2. A milking parlour arrangement according to claim 1, **characterised in that** the magnet is a permanent magnet.

3. A milking parlour arrangement according to any one of claims 1-2, **characterised in that** the attachment body (11) comprises the ferromagnetic material and the bracket (10) comprises the magnet.

4. A milking parlour arrangement according to claim 2 or 3, **characterised in that** the bracket (10) comprises a sleeve (10a) with a through-hole (10b) for connecting the bracket (10) to the long milk tube (9), wherein an outer portion of the sleeve (10a) has a magnet holder with a pocket (10c) in which a permanent magnet (10d) is provided.

5. A milking parlour arrangement according to claim 1, **characterised in that** the magnet is an electromagnet.

6. A milking parlour arrangement according to claim 5, **characterised in that** the attachment body (12) comprises the electromagnet.

7. A milking parlour arrangement according to claim 5 or 6, **characterised in that** it comprises a control unit (14) for controlling the operation of the electromagnet, and that the control unit (14) is configured to control the electromagnet on basis of input received manually from an operator and/or input received automatically from a sensor (16).

8. A milking parlour arrangement according to any one of claims 1 - 7, **characterised in that** the milking parlour arrangement is a rotary milking parlour arrangement having a plurality of milking stalls (2) distributed around a common rotational axis.

9. A milking parlour arrangement according to claim 8, **characterised in that** the milking parlour arrangement comprises a sensor (16) for sensing the rotational position of said rotary milking parlour or the individual milking stall (2) and a control unit (14) for controlling the electromagnet on basis of input received from said sensor (16).

10. A milking parlour arrangement according to any one of claims 1-9, **characterised in that** it comprises a cluster removal device (17), which is connected to the milking cluster (8) through a cord (18) and configured to retract the cord (18) in order to pull the milking cluster (8) from the teats of the animal upon ending of a milking operation.

11. A milking parlour arrangement according to claim 10, **characterised in that** the cluster removal device (17) is configured to automatically drop the milking cluster (8) into a position inside the operator pit (4) in which the milking cluster (8) hangs down in the inactive state from the cluster removal device (17) at a position below a level at which the attachment body (11, 12) is located, wherein the magnet and the ferromagnetic material provides an attraction force to each other that is inferior to a downforce acting on the bracket during the drop of the milking cluster.

12. A milking parlour arrangement according to any one of claims 1-11, **characterised in that** the attachment body (11, 12) is an integrated part of or attached to a rear end edge of the milking platform (3).

13. A milking parlour arrangement according to any one of claims 1-12, **characterised in that** it comprises a pulsation tube (19) configured to provide pulsating vacuum to the cluster (8), and that the pulsation tube (19) is connected to and held by said bracket (10, 13).

## Patentansprüche

1. Melkstandanordnung (1), umfassend,
- eine Melkbox (2), die konfiguriert ist, um ein Tier während des Melkens des Tieres unterzubringen, wobei sich die Melkbox (2) auf einer Melkplattform (3) befindet,
- eine Bedienergrube (4), die an einem hinteren Ende (5) der Melkplattform (3) bereitgestellt ist, wobei die Bedienergrube (4) einen Bedienergrubenboden (6) aufweist, der sich auf einem niedrigeren Niveau als das Niveau der Melkplattform (3) befindet, - eine Melkeinrichtung (7), umfassend
- ein Melkzeug (8), und
einen langen Milchschlauch (9), der mit dem Melkzeug (8) verbunden ist,
- wobei die Melkeinrichtung konfiguriert ist, um in einem aktiven Zustand, in dem das Melkzeug (8) an den Zitzen des Tieres in der Melkbox (2) angebracht ist, und einem inaktiven Zustand zu sein, in dem das Melkzeug (8) in die Bedienergrube (4) herabhängt, und die Melkstandanordnung eine Halterung (10, 13), die an dem langen Milchschlauch angebracht ist, und einen Anbringungskörper (11, 12), der an dem hinteren Ende der Melkplattform (3) bereitgestellt ist, umfasst, **dadurch gekennzeichnet, dass** eines der Halterung (10, 13) und des Anbringungskörpers (11, 12) einen Magnet umfasst, und das andere der Halterung (10, 13) und des Anbringungskörpers (11, 12) ein ferromagnetisches Material umfasst, und dadurch, dass in dem aktiven Zustand die Halterung (10, 13) an dem Anbringungskörper (11, 12) durch eine magnetische Anziehungskraft zwischen diesen angebracht ist, wobei der Magnet und das ferromagnetische Material eine Anziehungskraft zueinander vorweisen, die eine Schwerkraft, die auf den langen Milchschlauch (9) wirkt, übersteigt und geringer als eine Schwerkraft ist, die auf das Melkzeug (8) in Kombination mit dem Milchschlauch (9) wirkt.

2. Melkstandanordnung nach Anspruch 1, **dadurch gekennzeichnet, dass** der Magnet ein Dauermagnet ist.

3. Melkstandanordnung nach einem der Ansprüche 1 bis 2,
**dadurch gekennzeichnet, dass** der Anbringungskörper (11) das ferromagnetische Material umfasst und die Halterung (10) den Magnet umfasst.

4. Melkstandanordnung nach Anspruch 2 oder 3,
**dadurch gekennzeichnet, dass** die Halterung (10) eine Hülse (10a) mit einem Durchgangsloch (10b) zum Verbinden der Halterung (10) mit dem langen Milchschlauch (9) umfasst, wobei ein äußerer Abschnitt der Hülse (10a) einen Magnethalter mit einer Tasche (10c) aufweist, in der ein Dauermagnet (10d) bereitgestellt ist.

5. Melkanordnung nach Anspruch 1, **dadurch gekennzeichnet, dass** der Magnet ein Elektromagnet ist.

6. Melkstandanordnung nach Anspruch 5, **dadurch gekennzeichnet, dass** der Anbringungskörper (12) den Elektromagnet umfasst.

7. Melkstandanordnung nach Anspruch 5 oder 6,
**dadurch gekennzeichnet, dass** sie eine Steuereinheit (14) zum Steuern des Betriebs des Elektromagneten umfasst, und dadurch, dass die Steuereinheit (14) konfiguriert ist, um den Elektromagnet auf Basis von Eingaben, die manuell von einem Bediener empfangen werden, und/oder Eingaben, die automatisch von einem Sensor (16) empfangen werden, zu steuern.

8. Melkstandanordnung nach einem der Ansprüche 1 bis 7,
**dadurch gekennzeichnet, dass** die Melkstandanordnung eine Rotationsmelkstandanordnung ist, die eine Vielzahl von Melkboxen (2) aufweist, die um eine gemeinsame Rotationsachse verteilt sind.

9. Melkstandanordnung nach Anspruch 8, **dadurch gekennzeichnet, dass** die Melkstandanordnung einen Sensor (16) zum Erfassen der Rotationsposition des Rotationsmelkstands oder der einzelnen Melkbox (2) und eine Steuereinheit (14) zum Steuern des Elektromagneten auf Basis von Eingaben, die von dem Sensor (16) empfangen werden, umfasst.

10. Melkstandanordnung nach einem der Ansprüche 1 bis 9,
**dadurch gekennzeichnet, dass** sie eine Melkzeugabnahmevorrichtung (17) umfasst, die mit dem Melkzeug (8) über eine Leine (18) verbunden und konfiguriert ist, um die Leine (18) zurückzuziehen, um das Melkzeug (8) von den Zitzen des Tieres bei Beendigung eines Melkvorgangs zu ziehen.

11. Melkstandanordnung nach Anspruch 10, **dadurch gekennzeichnet, dass** die Melkzeugabnahmevorrichtung (17) konfiguriert ist, um das Melkzeug (8) in eine Position innerhalb der Bedienergrube (4) automatisch fallen zu lassen, in der das Melkzeug (8) in dem inaktiven Zustand von der Melkzeugabnahmevorrichtung (17) an einer Position unterhalb einer Ebene herabhängt, auf der sich der Anbringungskörper (11, 12) befindet, wobei der Magnet und das ferromagnetische Material eine Anziehungskraft zueinander bereitstellen, die geringer als eine Abwärtskraft, die auf die Halterung während des Fallens des Melkzeugs wirkt, ist.

12. Melkstandanordnung nach einem der Ansprüche 1 bis 11,
**dadurch gekennzeichnet, dass** der Anbringungskörper (11, 12) ein integrierter Teil einer hinteren Endkante der Melkplattform (3) ist oder an dieser angebracht ist.

13. Melkstandanordnung nach einem der Ansprüche 1 bis 12,
**dadurch gekennzeichnet, dass** sie einen Pulsationsschlauch (19) umfasst, der konfiguriert ist, um pulsierendes Vakuum an das Melkzeug (8) bereitzustellen, und dadurch, dass der Pulsationsschlauch (19) mit der Halterung (10, 13) verbunden und durch diese gehalten wird.

## Revendications

1. Agencement de salle de traite (1), comprenant,
- une stalle de traite (2) conçue pour accueillir un animal pendant la traite de l'animal, ladite stalle de traite (2) étant située sur une plate-forme de traite (3),
- une fosse d'opérateur (4), disposée au niveau d'une extrémité arrière (5) de la plate-forme de traite (3), ladite fosse d'opérateur (4) ayant un plancher de fosse d'opérateur (6), qui se trouve à un niveau inférieur au niveau de la plate-forme de traite (3), - un appareil de traite (7) comprenant
- un faisceau trayeur (8), et
- un long tuyau à lait (9) relié au faisceau trayeur (8),
- ledit appareil de traite étant configuré pour être dans un état actif dans lequel le faisceau trayeur (8) est fixé aux trayons de l'animal dans la stalle de traite (2), et un état inactif dans lequel le faisceau trayeur (8) pend dans la fosse d'opérateur (4), et ledit agencement de salle de traite comprend un support (10, 13) fixé au long tuyau à lait et un corps de fixation (11, 12) disposé au niveau de l'extrémité arrière de la plate-forme de traite (3), **caractérisé en ce que** l'un du support (10, 13) et du corps de fixation (11, 12) comprend un aimant, et l'autre du support (10, 13) et du corps de fixation (11, 12) comprend un matériau ferromagnétique, et **en ce que**, dans ledit état actif, le support (10, 13) est fixé au corps de fixation (11, 12) par une force d'attraction magnétique entre eux, dans lequel l'aimant et le matériau ferromagnétique présentent l'un pour l'autre une force d'attraction qui dépasse une force gravitationnelle agissant sur le long tuyau à lait (9) et inférieure à une force gravitationnelle agissant sur le faisceau trayeur (8) en combinaison avec le tuyau à lait (9).

2. Agencement de salle de traite selon la revendication 1,
**caractérisé en ce que** l'aimant est un aimant permanent.

3. Agencement de salle de traite selon l'une quelconque des revendications 1 à 2, **caractérisé en ce que** le corps de fixation (11) comprend le matériau ferromagnétique et le support (10) comprend l'aimant.

4. Agencement de salle de traite selon la revendication 2 ou 3,
**caractérisé en ce que** le support (10) comprend un manchon (10a) avec un trou traversant (10b) permettant de relier le support (10) au long tube à lait (9), dans lequel une partie externe du manchon (10a) a un support d'aimant avec une poche (10c) dans laquelle est disposé un aimant permanent (10d).

5. Agencement de salle de traite selon la revendication 1,
**caractérisé en ce que** l'aimant est un électro-aimant.

6. Agencement de salle de traite selon la revendication 5,
**caractérisé en ce que** le corps de fixation (12) comprend l'électro-aimant.

7. Agencement de salle de traite selon la revendication 5 ou 6,
**caractérisé en ce qu'**il comprend une unité de commande (14) permettant de commander le fonctionnement de l'électro-aimant, et **en ce que** l'unité de commande (14) est configurée pour commander l'électro-aimant sur la base d'une entrée reçue manuellement d'un opérateur et/ou d'une entrée reçue automatiquement d'un capteur (16).

8. Agencement de salle de traite selon l'une quelconque des revendications 1 à 7, **caractérisée en ce que** l'agencement de salle de traite est un agencement de salle de traite rotatif ayant une pluralité de stalles de traite (2) réparties autour d'un axe de rotation commun.

9. Agencement de salle de traite selon la revendication 8,
**caractérisé en ce que** l'agencement de salle de traite comprend un capteur (16) permettant de détecter la position rotative de ladite salle de traite rotative ou de la stalle de traite individuelle (2) et une unité de commande (14) permettant de commander l'électro-aimant sur la base d'une entrée reçue dudit capteur (16).

10. Agencement de salle de traite selon l'une quelconque des revendications 1 à 9, **caractérisé en ce qu'**il comprend un dispositif de retrait de faisceau (17), qui est relié au faisceau trayeur (8) par un cordon (18) et configuré pour rétracter le cordon (18) afin de retirer le faisceau trayeur (8) des trayons de l'animal à la fin d'une opération de traite.

11. Agencement de salle de traite selon la revendication 10,
**caractérisé en ce que** le dispositif de retrait de faisceau (17) est configuré pour laisser tomber automatiquement le faisceau trayeur (8) dans une position à l'intérieur de la fosse d'opérateur (4) dans laquelle le faisceau trayeur (8) pend à l'état inactif du dispositif de retrait de faisceau (17) au niveau d'une position en dessous d'un niveau auquel le corps de fixation (11, 12) est situé, dans lequel l'aimant et le matériau ferromagnétique fournissent l'un à l'autre une force d'attraction qui est inférieure à une force descendante agissant sur le support pendant la chute du faisceau trayeur.

12. Agencement de salle de traite selon l'une quelconque des revendications 1 à 11, **caractérisé en ce que** le corps de fixation (11, 12) fait partie intégrante d'un bord d'extrémité arrière de la plate-forme de traite (3), ou y est fixé.

13. Agencement de salle de traite selon l'une quelconque des revendications 1 à 12, **caractérisé en ce qu'**il comprend un tube de pulsation (19) configuré pour fournir un vide pulsé au faisceau (8), et **en ce que** le tube de pulsation (19) est relié audit support (10, 13) et est maintenu par celui-ci.
